# FASCICULE DE BREVET EUROPEEN

(11) **EP 2 529 091 B1**
(45) Date de publication et mention de la délivrance du brevet: **06.04.2016**
(21) Numéro de dépôt: 10809286.7
(22) Date de dépôt: 16.12.2010
(51) Int. Cl.: F01N 3/021, F01N 3/035, F01N 3/20, F01N 3/28, F01N 13/00

(54) **DISPOSITIF DE POST-TRAITEMENT DES GAZ D'ÉCHAPPEMENT D'UN MOTEUR À COMBUSTION INTERNE**
ABGASNACHBEHANDLUNGSVORRICHTUNG EINER BRENNKRAFTMASCHINE
EXHAUST GAS AFTERTREATMENT DEVICE OF AN INTERNAL COMBUSTION ENGINE

(30) Priorité: 27.05.2010 FR 1054080; 25.01.2010 FR 1050453
(43) Date de publication de la demande: 05.12.2012
(73) Titulaire: Peugeot Citroën Automobiles SA, 78140 Vélizy Villacoublay (FR)
(72) Inventeur: LE TALLEC, Thomas, F-78500 Sartrouville (FR); CHAPEL, Julien, F-77380 Combs La Ville (FR); FERRAND, Nicolas, F-92000 Nanterre (FR); FERHAN, Mehdi, F-75015 Paris (FR)
(74) Mandataire: Laurin, Ghislain Nicolas
(86) Numéro de dépôt international: PCT/FR2010/052765
(87) Numéro de publication internationale: WO 2011/089330

(56) Documents cités:
- EP-A1- 1 419 816
- EP-A1- 2 295 754
- WO-A2-2008/144385
- GB-A- 2 381 218
- JP-A- 2006 132 393
- US-A1- 2005 224 274
- US-A1- 2008 041 050

## Description

La présente invention revendique la priorité de la demande française 1050453 déposée le 25 Janvier 2010 et la priorité de la demande française 1054080 déposée le 27 Mai 2010.

L'invention porte sur le domaine des moyens de traitement des polluants des gaz d'échappement des moteurs à combustion.

Les émissions polluantes des moteurs à combustion équipant les véhicules automobiles sont réglementées par des normes de plus en plus sévères. Les polluants réglementés sont - selon la technologie de moteur à combustion considérée - le monoxyde de carbone (CO), les hydrocarbures imbrûlés (HC), les oxydes d'azotes (NOx), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs diesel. Pour le traitement des oxydes d'azote (NOx), on connaît des technologies de réduction catalytique sélective, ou « SCR » pour « selective catalytic réduction », qui consistent à réduire les NOx par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les technologies de réduction catalytique sélective présentent l'avantage de permettre un très haut niveau de conversion des oxydes d'azotes.

D'une manière générale, la catalyse SCR nécessite d'ajouter un substrat catalytique dans la ligne d'échappement, ainsi qu'un moyen d'introduction du réducteur dans les gaz d'échappement, qui peut par exemple être un injecteur de réducteur.

Classiquement, le catalyseur SCR est placé sous la caisse du véhicule, loin du moteur car le réducteur injecté a besoin d'un long parcours dans la ligne d'échappement pour se décomposer d'une part, et de volumes libres suffisants pour s'implanter d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (Adblue@) ou préchauffage du système de mise à disposition de réducteur (gaz)), souffre de cet éloignement de la sortie du collecteur d'échappement. Un dispositif suivant le préambule de la revendication 1 est connu du document WO2008/144385 A. Il est par ailleurs connu du document EP 2 295 754 A (l'état de la technique tel que défini selon l'Article 54(3) CBE, qui n'est pas pris en considération pour l'appréciation de l'activité inventive) une architecture de dépollution comprenant, d'amont en aval, un catalyseur d'oxydation, un accélérateur de décomposition d'urée, un mélangeur d'urée, un catalyseur SCR puis un filtre à particules.

Dans l'invention, on résout ce problème en proposant un ensemble de post-traitement regroupant dans un module compact le traitement des HC et CO, et le traitement des NOx par réduction catalytique sélective, et permettant, selon la variante de l'invention considérée, une implantation dans l'espace sous capot moteur d'un véhicule automobile. En outre, ce dispositif est optimisé dans l'invention pour éviter l'arrosage du catalyseur d'oxydation par du réducteur par l'adoption d'un pré-catalyseur SCR positionné entre le catalyseur d'oxydation et les moyens d'introduction de réducteur à l'échappement. On propose ainsi un dispositif de traitement des oxydes d'azote compact, dans un seul « canning » ou enveloppe. Une telle configuration participe à la réduction du volume d'implantation de l'ensemble des moyens de post-traitement d'un moteur à combustion, ce qui est fondamental par exemple dans une application automobile. Tel qu'il est proposé dans l'invention, le dispositif de post-traitement peut par exemple être implanté dans le sous-capot moteur d'un véhicule automobile. Ceci conduit à un rapprochement du dispositif de post-traitement du moteur, engendrant un cercle vertueux dans la conception du dispositif : les éléments du dispositif de post-traitement, en étant disposés à proximité de la sortie des chambres de combustion du moteur (sous capot et non sous caisse dans une application automobile), jouissent de conditions thermiques favorables à un fonctionnement optimal, ce qui permet d'en réduire la taille pour obtenir une même efficacité de traitement, comparé à un dispositif implanté sous caisse.

Préférentiellement, le dispositif comporte en outre un pré-catalyseur de réduction catalytique sélective des oxydes d'azote entre le catalyseur d'oxydation et l'embouchure. La demanderesse a en effet constaté l'existence d'un risque d'arrosage du catalyseur d'oxydation par du réducteur (ou du précurseur d'agent réducteur) introduit en aval de celui-ci. En effet, on tend à obtenir une taille de gouttes du réducteur (ou de son précurseur) la plus petite possible lors de son introduction, afin de faciliter le mélange du réducteur dans les gaz d'échappement. Or, une étude comparative menée par la demanderesse sur divers injecteurs de réducteur montre que des tailles de gouttes fines vont généralement de pair avec un cône de spray large, ce qui augmente le risque d'arrosage du catalyseur d'oxydation en amont.

Un tel phénomène est très préjudiciable, pour deux raisons principales. D'une part, le réducteur entrant en contact avec le catalyseur d'oxydation est transformé (notamment dans le cas d'un réducteur à base d'urée) en oxydes d'azotes, ce qui augmente la quantité de NOx à traiter par le système. D'autre part, le réducteur ainsi transformé sur le catalyseur est consommé en pure perte.

Le pré-catalyseur de réduction catalytique sélective des oxydes d'azote ainsi disposé permet la réduction d'au moins une part des oxydes d'azotes présent dans les gaz d'échappement par le pain catalytique située en amont de l'embouchure des moyens d'introduction de réducteur ou de précurseur de réducteur, à savoir le pré-catalyseur de réduction catalytique sélective et non plus le catalyseur d'oxydation.

De préférence, le pré-catalyseur de réduction catalytique sélective des oxydes d'azote est constitué d'un pain d'une longueur (mesurée selon la direction d'écoulement des gaz d'échappement) inférieure à 30mm, et de préférence comprise entre 20 mm et 30 mm. Cette longueur étant généralement inférieure aux autres dimensions du pain, on peut également parler d' « épaisseur » du pré-catalyseur. Le pré-catalyseur de réduction catalytique sélective des oxydes d'azote pourra notamment présenter une épaisseur de 1 pouce (25,4mm), unité de longueur généralement employée dans le domaine du post-traitement des gaz d'échappement automobile. Une telle faible longueur est néanmoins suffisante pour annuler le risque d'entrée en contact du réducteur sur le catalyseur d'oxydation, hydrolyser le précurseur de réducteur qui serait injecté à reflux, tout en restant dans des limites de faisabilité industrielles.

Le pré-catalyseur peut notamment présenter les mêmes caractéristiques générales (matériau du substrat et/ou densité de cellule et/ou épaisseur de paroi et/ou revêtement catalytique) que le catalyseur de réduction sélective des oxydes d'azote employé dans l'invention. Le précurseur d'agent réducteur, dans le cadre d'un dispositif de réduction catalytique sélective des oxydes d'azote mettant en jeu de l'urée, en contact avec cette tranche catalytique est alors hydrolysé et ce qui permet ensuite sa transformation en NH3 qui sera, à son tour, employé au post-traitement des NOx.

Le pré-catalyseur peut également permettre, selon l'application considérée, de réduire la longueur du catalyseur de réduction catalytique sélective des oxydes d'azotes (car une part du traitement est prise en charge par le pré-catalyseur de réduction catalytique sélective). En réduisant la longueur du catalyseur de réduction catalytique sélective des oxydes d'azotes, on diminue son inertie thermique, ce qui est un paramètre très important pour la rapidité de montée en température du catalyseur et au final pour l'efficacité globale du dispositif.

De préférence, le catalyseur d'oxydation présente une densité de cellule comprise entre 62 et 140 cellules par centimètre carré, et de préférence de l'ordre de 93 cellules par centimètres carré. La densité de cellule correspond au nombre de cellules ou « canaux » formés dans le catalyseur par unité de surface, est observé selon une section transversale du catalyseur, sensiblement orthogonale à l'axe dans lequel les gaz peuvent traverser le catalyseur. Pour un catalyseur cylindrique, on observe donc une section transversale à l'axe principal du catalyseur. En pratique, s'il présente des canaux non borgnes, débouchant orthogonalement à la face d'entrée ou de sortie du catalyseur, on observe la densité de canaux sur la face d'entrée ou de sortie du catalyseur.

De préférence, le catalyseur d'oxydation présente une épaisseur de paroi de comprise entre 50 µm et 165 µm. On entend par épaisseur de paroi l'épaisseur des parois séparant deux canaux d'un catalyseur.

L'utilisation de hautes densités de cellules, typiquement de 600 CPSI (cellules par pouce carré) soit de l'ordre de 93 cellules par cm², et/ou de faibles épaisseurs de parois, typiquement entre 2 millièmes de pouce (environ 50 µm) et 6,5 millièmes de pouce (environ 165 µm) sur le catalyseur d'oxydation diesel permet d'augmenter son efficacité de conversion du monoxyde de carbone et des hydrocarbures imbrûlés, ainsi que sa faculté à transformer le monoxyde d'azote en dioxyde d'azote. Or, cela participe de l'obtention aussi souvent que possible d'un ratio NO2/NOx dans les gaz d'échappement après le catalyseur d'oxydation proche de 50%, ce qui est nécessaire au bon fonctionnement de la réduction catalytique sélective des NOx. Il est également possible, dans une variante, de positionner dans le dispositif deux catalyseurs d'oxydation diesel consécutifs, dont au moins l'un des deux présente des hautes densités de cellules de l'ordre de 600 cellules par pouce carré (environ 93 cellules par cm²) et/ou de faibles épaisseur de parois entre 2 millipouces (environ 50 µm) et 7 millipouces (environ 178 µm).

L'obtention d'un catalyseur d'oxydation particulièrement efficace participe de la compacité du dispositif selon l'invention, et par conséquent de la possibilité de l'implanter à proximité de la sortie des chambres de combustion du moteur, et donc d'obtenir un dispositif encore plus compact et facile à implanter.

De préférence, le catalyseur de réduction catalytique sélective des oxydes d'azote présente une densité de cellule comprise entre 62 et 140 cellules par centimètre carré, et de préférence de l'ordre de 93 cellules par centimètres carré.

De préférence, le catalyseur de réduction catalytique sélective des oxydes d'azote présente une épaisseur de paroi de comprise entre 50 µm et 165 µm.

L'utilisation de hautes densités de cellules, typiquement de 600 CPSI (cellules par pouce carré) soit de l'ordre de 93 cellules par cm², et/ou de faibles épaisseurs de parois, typiquement entre 2 millièmes de pouce (environ 50 µm) et 6,5 millièmes de pouce (environ 165 µm) sur le catalyseur SCR permet d'augmenter son efficacité en conversion des oxydes d'azote L'obtention d'un catalyseur de réduction catalytique sélective des oxydes d'azotes particulièrement efficace participe de la compacité du dispositif selon l'invention, et par conséquent de la possibilité de l'implanter à proximité de la sortie des chambres de combustion du moteur, et donc d'obtenir un dispositif encore plus compact et facile à implanter. Dans une variante de l'invention, on positionne dans le dispositif deux catalyseurs SCR consécutifs, dont au moins l'un des deux présente des hautes densités de cellules (600 cellules par pouce carré (environ 93 cellules par cm²) et/ou faibles épaisseur de parois (2 millièmes de pouce (environ 50 µm), 3,5 millièmes de pouce (environ 89 µm), 7 millième de pouce (environ 178 µm)) afin d'augmenter son efficacité de conversion. Le catalyseur SCR peut, dans une variante de l'invention, présenter une imprégnation catalytique hétérogène pour en optimiser l'efficacité ou pour en améliorer la tenue (maintien des performances) dans le temps.

Le mélangeur est d'un type présentant une longueur de parcours pour des gaz le traversant au moins deux fois supérieur à la longueur qu'il occupe longitudinalement dans l'enveloppe. Le but du mélangeur est d'homogénéiser le mélange entre les gaz d'échappement et le réducteur, et, si l'on introduit un précurseur d'un agent réducteur, de favoriser la décomposition du précurseur de réducteur en agent réducteur. L'emploi d'un mélangeur imposant au gaz d'échappement un parcours relativement long comparativement à la longueur du réducteur, par exemple d'un type imposant au gaz un cheminement sensiblement hélicoïdal, est particulièrement adapté à l'invention. Il permet, par l'obtention une distance de parcours des gaz d'échappement supérieure à ses propres dimensions, l'emploi dans un dispositif compact d'une solution à base d'urée en tant que précurseur d'ammoniac, alors même que l'hydrolyse de l'urée dans les gaz d'échappement nécessite un temps non négligeable.

Un tel mélangeur permet notamment l'injection de précurseur de réducteur dans une section d'échappement égale à la section des pains de catalyse, c'est-à-dire dans une enveloppe ne présentant pas de restriction de section particulière au point d'introduction du réducteur. Il permet en outre l'obtention de ces performances en ne générant que de faibles pertes de charges.

Dans une variante préférée de l'invention, le mélangeur a une longueur inférieure à 100mm et de préférence inférieure à 70mm. Dans une application automobile classique, le mélange du réducteur avec une répartition de 95% de la même quantité en espèce sur toute la surface d'entrée du catalyseur SCR et/ou la décomposition complète d'un précurseur de réducteur peuvent être atteints à la sortie du mélangeur avec un mélangeur imposant au gaz un cheminement sensiblement hélicoïdal d'une longueur, mesurée longitudinalement dans l'enveloppe du dispositif, de l'ordre de 70mm.

Du fait de son faible encombrement et de sa grande efficacité, un tel mélangeur permet dans le cadre d'un système SCR mettant en jeu un précurseur d'agent réducteur à base d'urée, par un positionnement du dispositif dans une zone thermiquement favorable, de limiter le risque d'encrassement par l'urée cristallisée (en profitant d'une thermique favorable)

De préférence, l'enveloppe est munie d'un convergent de sortie doté d'une sortie latérale, sensiblement orthogonale à son entrée. Cela permet une implantation plus aisée du dispositif. Cela est particulièrement intéressant dans une application automobile dans le cas ou le dispositif selon l'invention est implanté verticalement dans un sous capot moteur : il est ainsi possible de relier le dispositif à un circuit d'échappement sous caisse sensiblement horizontal.

De préférence, l'enveloppe unique est sensiblement en forme d'un cylindre muni d'un divergent d'entrée et d'un convergeant de sortie, d'une longueur totale inférieure à 700mm. L'application des caractéristiques proposées dans l'invention, permettent, seules ou en combinaison, de contenir la longueur de l'enveloppe (et donc de l'ensemble du dispositif) à une longueur d'environ 700mm, compatible de l'implantation dans un sous-capot moteur d'un véhicule automobile.

De préférence, le moyen d'introduction est un injecteur du type à actionneur par solénoïde ou par piézoélectrique ou mécanique ou hydropneumatique. Le niveau de pression d'injection employé est adapté en fonction de l'efficacité des éléments en interface (typiquement de 4 à 30 bars).

L'injecteur de précurseur de réducteur ou de réducteur a, dans la présente invention, des caractéristiques fonctionnelles et géométriques optimisées, qui participent au compactage du dispositif selon l'invention. L'emploi d'un injecteur du type à actionneur par solénoïde ou par piézoélectrique ou mécanique ou hydropneumatique dont le niveau de pression d'injection dépendra de l'efficacité des éléments en interface. Typiquement une pression d'injection de 4 à 30 bars pour l'introduction d'un réducteur (ou précurseur) liquide permet en particulier une taille de gouttes de l'ordre de 30 à 100 microns compatible de l'invention. Il permet également l'obtention d'une vitesse de pénétration du spray, mesurée en sortie d'injecteur, de l'ordre de 10 à 30m/s compatible de l'invention. En outre, on positionne l'injecteur de sorte à favoriser le mélange du réducteur dans les gaz d'échappement. La capacité d'intégration de l'injecteur de précurseur dans l'environnement géométrique disponible peut en outre nécessiter de désaxer l'axe du spray d'injection de l'axe de l'injecteur, d'un angle de l'ordre de -15° à +15°.

De préférence, le moyen d'introduction de réducteur est positionné en regard d'une section d'enveloppe identique à la section transversale du catalyseur de réduction catalytique sélective. Un tel arrangement, permis par la conjugaison d'un mélangeur efficace et de l'optimisation des moyens d'introduction de réducteur, permet l'obtention d'une géométrie d'enveloppe, et donc de dispositif, simple et compacte.

Le dispositif comporte un filtre à particules, dans l'enveloppe unique. On obtient ainsi dans un ensemble compact un dispositif de traitement de l'ensemble des polluants réglementés dans une application automobile (CO, HC, NOx, et particules).

Dans une variante de l'invention, le filtre à particules est positionné en aval du catalyseur de réduction catalytique sélective.

Dans une variante de l'invention, un substrat unique est mis en jeu pour le catalyseur de réduction catalytique sélective et le filtre à particules. On obtient ainsi dans l'invention un dispositif particulièrement optimisé en termes d'encombrement de masse et de prix de revient. L'emploi d'un substrat unique pour faire filtre à particules et porter une imprégnation catalytique pour la SCR permet la réalisation de ces fonctions dans un volume nettement moindre qu'en employant deux substrats séparés. La capacité de filtration et de stockage du filtre à particules n'est que peu impactée par la présence d'une imprégnation SCR, tandis qu'un substrat du type filtre à particules est parfaitement adapté à porter une imprégnation catalytique SCR. L'emploi d'une imprégnation SCR hétérogène prend alors tout son sens, notamment pour garantir un bon maintien de l'efficacité de la SCR dans le temps, malgré des sollicitations thermiques importantes liées aux régénérations du filtre à particules.

L'invention porte également sur un ensemble comportant un collecteur d'échappement, un dispositif de post-traitement tel que décrit dans l'invention, et un conduit reliant le collecteur d'échappement au dispositif de post-traitement, caractérisé en ce que le conduit présente une longueur d'au plus 30 cm. Un tel ensemble permet ainsi de profiter de conditions thermiques favorables à l'efficacité (ou à la réduction de volume pour une même efficacité) des différents éléments du dispositif de post-traitement. Notamment, le catalyseur d'oxydation connait une montée en température plus rapide et a une meilleure efficacité de conversion, il en va de même pour le catalyseur SCR, le mélange et l'éventuelle décomposition du réducteur est favorisée, et le filtre à particules - pour les variantes de l'invention qui en sont pourvues - est régénéré de manière plus efficace.

Le conduit entre le collecteur d'échappement et le dispositif selon l'invention peut en outre comporter une ou plusieurs turbines de turbocompresseur dans le cadre d'un moteur suralimenté, et, en particulier, le dispositif selon l'invention peut être raccordé directement au carter d'un turbocompresseur, à la sortie d'une turbine.

L'invention porte également sur un véhicule doté d'un compartiment moteur et d'un ensemble selon l'invention, caractérisé en ce que l'ensemble est contenu dans le compartiment moteur. Dans un tel véhicule, l'emploi d'un ensemble selon l'invention permet dans l'espace sous capot permet d'obtenir un moyen performant de dépollution tout en offrant de nombreux avantages en terme d'architecture générale du véhicule, en libérant des volumes sous plancher communément employés pour accueillir des éléments de post-traitement des gaz d'échappement.

L'invention est décrite plus en détail ci-après et en référence aux figures représentant schématiquement le système dans son mode de réalisation préférentiel.
La figure 1 présente de manière schématique un moteur et sa ligne d'échappement.
La figure 2 présente de manière schématique un moteur et sa ligne d'échappement.
Les figures 3 à 6 présentent de manière schématique un moteur et sa ligne d'échappement comportant un dispositif selon des variantes de l'invention.
La figure 7 présente une vue extérieure d'un ensemble selon l'invention.

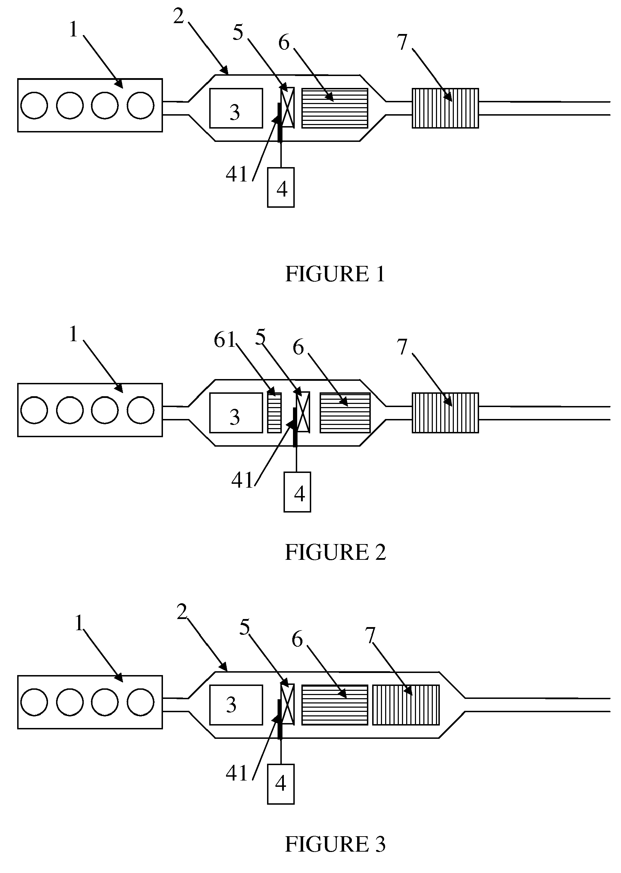

Dans la figure 1, on propose un dispositif de traitement des gaz d'échappement d'un moteur 1. Ce dispositif comporte, dans une même enveloppe 2 (que l'on peut également désigner par le terme anglophone de « canning ») et selon les sens d'écoulement, un catalyseur d'oxydation 3, une embouchure 41 d'un moyen d'introduction 4 de réducteur (ou d'un précurseur d'agent réducteur), un mélangeur 5, et un catalyseur SCR 6 (catalyseur de réduction catalytique sélective des oxydes d'azote).

Dans l'application représentée en figure 1, la ligne d'échappement comporte en outre un filtre à particules 7, pour piéger les particules de suies des gaz d'échappement.

Lors du fonctionnement du moteur 1, les gaz d'échappement traversent en premier lieu le catalyseur d'oxydation 3. Le monoxyde de carbone (CO) et les hydrocarbures imbrûlés (HC) sont ainsi éliminés des gaz d'échappement. Le catalyseur d'oxydation 3 permet également de transformer une partie du monoxyde d'azote (NO) en dioxyde d'azote (NO2), cette transformation est nécessaire pour améliorer la réduction catalytique sélective des oxydes d'azote (NOx) le catalyseur SCR 6. Dans une variante de l'invention on peut utiliser un revêtement spécifique sur le catalyseur d'oxydation 3 visant à stocker tout à partie des émissions d'oxydes d'azote, notamment lorsque le catalyseur SCR 6 n'a pas atteint une température suffisante pour assurer une bonne conversion des oxydes d'azote. On parle alors d'une fonction d'adsorbeur d'oxydes d'azote incluse au catalyseur d'oxydation diesel 3. Le catalyseur d'oxydation convertit donc CO et HC, mais surtout, dans la présente invention, produit un ratio NO2/NOx proche de 50% le plus souvent possible. Cette fonctionnalité est atteinte avec un encombrement réduit grâce à l'utilisation de géométries particulières sur la densité de cellules et l'épaisseur des parois. On utilise de préférence un catalyseur d'oxydation présentant de l'ordre de 600 CPSI (cells per square inch) soit environ 93 cellules par centimètre carré, et une épaisseur de paroi comprise entre 2 millièmes de pouce (environ 50 µm) et 6,5 millièmes de pouce (environ 165 µm)

Le moyen d'introduction de réducteur 4 permet d'introduire dans la ligne d'échappement, par son embouchure 41, un réducteur ou un précurseur de réducteur, réducteur nécessaire pour assurer la réaction de réduction des oxydes d'azote sur le catalyseur SCR 6. Le réducteur est fourni par une source (non représentée) qui peut source être une source de réducteur liquide (solution d'urée, formate de guanidine), gazeuse (type ammoniaque sous pression), et solide (sels d'ammoniac).

Le réducteur est décomposé dans le mélangeur 5, sur une très courte distance. Il convient pour ce faire d'employer un mélangeur ayant une grande efficacité, par exemple en ce qu'il impose aux gaz le traversant une distance de parcours largement supérieure à ses dimensions extérieure, et/ou en ce qu'il génère des turbulences dans le flux gazeux qui en favorise le mélange. Dans une application automobile, des essais on permis l'obtention d'un mélange suffisant avec un mélangeur présentant une dimension de 69mm (mesurée longitudinalement dans l'enveloppe) et engendrant une perte de charge limitée à environ 100 millibars. Enfin, les particules de suies s'accumulent sur le filtre à particules 7, réduisant ainsi leur présence en sortie d'échappement.

La figure 2 présente un dispositif très proche de celui représenté en figure 1, à la différence près qu'il présente en outre un précatalyseur de réduction catalytique sélective des oxydes d'azote 61 entre le catalyseur d'oxydation 3 et l'embouchure 41.

Le pré-catalyseur SCR 61 correspond à un pain catalytique SCR de préférence de faible longueur, de l'ordre de 1 pouce (25,4mm environ). Il peut présenter les mêmes caractéristiques que le catalyseur SCR 6, notamment pour ce qui est de l'imprégnation catalytique.

Le pré-catalyseur SCR 61 permet d'éviter qu'une part du réducteur (ou du précurseur d'agent réducteur) introduit dans la ligne d'échappement ne puisse entrer en contact avec le catalyseur d'oxydation, sur lequel il pourrait être transformé en NOx (dans le cas d'un réducteur à base d'urée, notamment). Ce phénomène peut notamment se produire, dans certaines conditions d'utilisation, lorsque le moyen d'introduction de réducteur 4 est un injecteur présentant un large cône d'injection.

L'introduction du pré-catalyseur SCR 61 peut également permettre, selon l'application considérée, de réduire le volume du catalyseur SCR 6, une partie du traitement de réduction catalytique sélective des oxydes d'azote étant prise en charge par le pré-catalyseur.

Un tel pré-catalyseur peut avantageusement être employé dans toutes les variantes de l'invention, notamment lorsque le moyen d'introduction de réducteur 4 est tel qu'il induit un risque d'arrosage du catalyseur d'oxydation 3 par du réducteur.

En figure 3, on a représenté schématiquement un moteur 1 et sa ligne d'échappement, comportant un dispositif selon une variante de l'invention. La configuration est proche de celle présentée en figure 1, mais diffère en ce que la ligne d'échappement est dotée d'un dispositif selon une variante de l'invention dans laquelle le filtre à particules 7 est disposé dans l'enveloppe unique 2, en aval du catalyseur SCR 6.

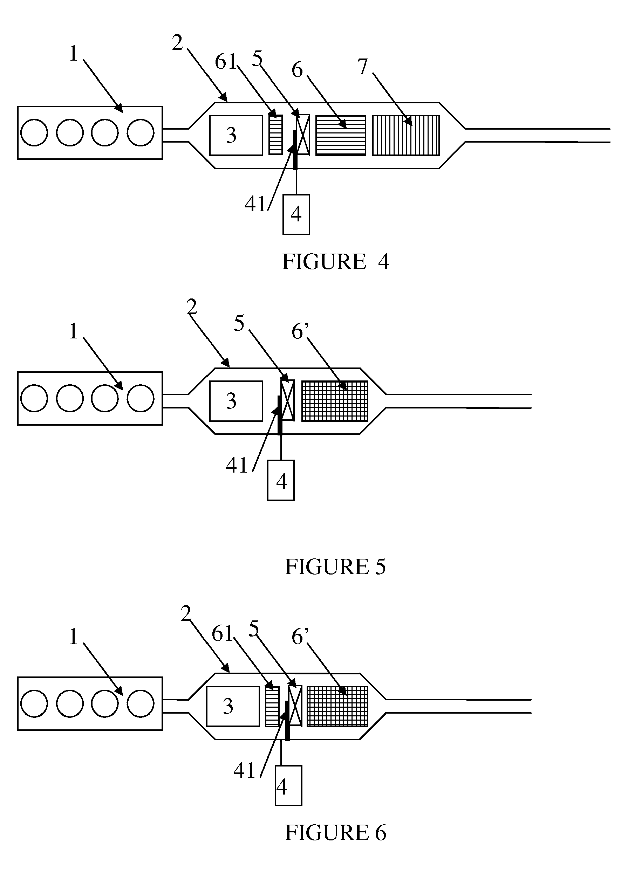

La figure 4 présente un dispositif très proche de celui représenté en figure 3, à la différence près qu'il présente en outre un précatalyseur de réduction catalytique sélective des oxydes d'azote 61 entre le catalyseur d'oxydation 3 et l'embouchure 41.

En figure 5, on a représenté schématiquement un moteur 1 et sa ligne d'échappement, comportant un dispositif selon une variante de l'invention. La configuration est proche de celles présentées précédemment, mais en diffère par la présence d'un substrat unique 6', remplissant à la fois le rôle de filtre à particules et celui de catalyseur SCR. Le substrat unique 6' peut donc être un monolithe en carbure de silicium, ou en cordiérite ou titanate d'aluminium par exemple, enduit d'une imprégnation catalytique permettant la réduction catalytique sélective des oxydes d'azote.

De préférence et dans une application automobile de l'invention, l'enveloppe unique 2 est disposé dans l'espace sous-capot accueillant le moteur 1. Dans une variante de l'invention non représentée, une (ou plusieurs) turbine de turbocompresseur peut être disposée entre la sortie du moteur (généralement un collecteur d'échappement) et le dispositif selon l'invention contenu dans l'enveloppe unique 2.

Afin de maximiser l'efficacité des différents éléments du dispositif selon l'invention, et permettre ainsi la réduction de leur volume pour atteindre un niveau d'efficacité souhaité, le conduit reliant la sortie du moteur à l'entrée dans l'enveloppe unique 2 est le plus court possible. Préférentiellement, dans une application automobile de l'invention, le conduit reliant la sortie d'un collecteur d'échappement du moteur 1 à l'entrée du dans le dispositif de post-traitement conforme à l'invention est inférieur à 30 cm.

La figure 6 présente un dispositif très proche de celui représenté en figure 5, à la différence près qu'il présente en outre un précatalyseur de réduction catalytique sélective des oxydes d'azote 61 entre le catalyseur d'oxydation 3 et l'embouchure 41.

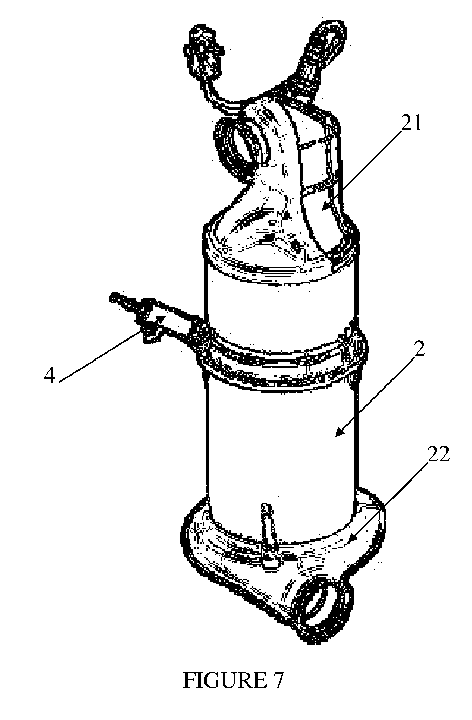

En figure 7 est présentée une vue extérieure d'un dispositif de post-traitement conforme à une variante de l'invention. L'enveloppe unique 2 du dispositif présente un divergent d'entrée 21 par lequel sont introduits les gaz d'échappement à traiter, et un convergeant de sortie 22 par lequel les gaz traités dans le dispositif en ressortent.

Dans la variante de l'invention ici représentée le divergent 21 ou cône d'entrée est optimisé en volume, tout en préservant le critère de perte de charge de l'ensemble du système. Sa géométrie a également pour but d'optimiser l'arrosage du catalyseur d'oxydation.

La géométrie convergent de sortie 22, ou cône de sortie, est optimisée afin d'en réduire la longueur, tout en préservant le critère de perte de charge de l'ensemble du système. En particulier, dans la variante de l'invention ici représentée, le convergent de sortie présente une forme aplatie, avec une sortie latérale sensiblement orthogonale à l'axe principal du dispositif, qui présente ici la forme général d'un cylindre. Une telle architecture permet de réduite la longueur totale du dispositif selon l'invention, et permet également de faciliter son implantation verticale dans l'espace sous-capot d'un véhicule automobile, en reliant le convergent de sortie 22 à un conduit d'échappement sous caisse sensiblement horizontal.

Dans la variante de l'invention ici représentée, le moyen d'introduction de réducteur 4 prend la forme d'un injecteur du type à actionneur par solénoïde ou par piézoélectrique ou mécanique ou hydropneumatique dont le niveau de pression d'injection dépendra de l'efficacité des éléments en interface (typiquement de 4 à 30 bars), dont l'embouchure au niveau de la tête d'injecteur est contenue dans l'enveloppe commune 2. L'injecteur débouche donc dans une section d'échappement sensiblement égale à la section des pains de catalyse, ne présentant pas de restriction de section particulière. En outre, le moyen de fixation de l'injecteur sur l'enveloppe unique 2 peut prendre la forme d'une embase imposant un angle prédéfini entre l'injecteur et la direction du flux gazeux dans le dispositif (ou l'axe principal du dispositif, ou toute autre référence géométrique), l'angle étant optimisé empiriquement ou à l'aide de moyens de simulation pour obtenir un compromis adéquat entre l'amélioration du mélange du réducteur dans les gaz d'échappement et la réduction du volume nécessaire à l'implantation du moyen d'introduction de réducteur 4.

L'invention présente ainsi des avantages techniques multiples. Elle offre un dispositif de post-traitement particulièrement compact, pouvant notamment permettre sont intégration dans l'espace sous capot d'un véhicule automobile, par exemple en face avant. Une intégration en sous-capot offre une plus grande liberté architecturale dans la conception des véhicules, libérant de nombreux volumes sous plancher.

En outre, le dispositif tel que décrit dans l'invention engendre un cercle vertueux dans la conception du dispositif de post-traitement. L'optimisation apportée, en permettant une installation rapprochée de la sortie du moteur, augmente l'efficacité de l'ensemble des éléments de post-traitement mis en jeu, ce qui permet d'en réduire le volume pour l'obtention un niveau d'efficacité donné. En effet la solution développée dans l'invention permet de rapprocher les éléments de dépollution du moteur, donc de la source de chaleur, et donc d'en augmenter l'efficacité. De plus, cette solution permet de réduire le volume total des éléments de dépollution à embarquer sur véhicule.

La réduction dimensionnelle des éléments de post-traitement présent en outre des avantages en termes de coûts et de masse. En particulier, l'invention permet la réduction de la longueur du ou des cannings métalliques, et la réduction de la quantité de métaux précieux portés notamment par le catalyseur d'oxydation. En effet, la fonction de réduction des oxydes d'azote sur le filtre à particules - SCR nécessite une bonne transformation du monoxyde d'azote (NO) en dioxyde d'azote (NO2) par le catalyseur d'oxydation. Cette transformation est dépendante de la quantité de métaux précieux embarqués sur le catalyseur d'oxydation. L'optimisation de la réduction des oxydes d'azote, induite par le rapprochement du catalyseur SCR de la source chaude, réduit la dépendance de cette fonction à la transformation de NO en NO2 par le catalyseur d'oxydation diesel, et réduit donc la quantité de métaux précieux à embarquer sur ce dernier.

Dans les variantes de l'invention comportant en outre un pré-catalyseur de réduction catalytique sélective des oxydes d'azote, l'invention permet en outre :
- d'empêcher le contact du précurseur ou du réducteur sur le catalyseur d'oxydation;
- d'améliorer l'efficacité de dépollution en réduisant l'inertie thermique ;
- d'augmenter les possibilités de choix des imprégnations catalytiques entre le précatalyseur et le catalyseur de réduction catalytique sélective des oxydes d'azotes.

Les intérêts économiques de ces variantes sont également multiples, notamment du fait d'une réduction de la quantité de métaux précieux à embarquer sur le catalyseur d'oxydation diesel, et d'une réduction de la longueur totale de catalyseur SCR (somme de la longueur du pré-catalyseur et du catalyseur d'oxydation catalytique sélective).

L'invention permet en outre d'envisager l'introduction aisée de la technologie de réduction catalytique sélective des oxydes d'azote dans les véhicule automobile, présentant un moteur Diesel de petite ou moyenne cylindrée (typiquement, inférieure à 2,2L de cylindrée).

L'introduction de la technologie de réduction catalytique sélective dans les véhicules permet en outre d'autoriser des émissions d'oxydes d'azote supérieures en sortie du moteur, ce qui permet l'adoption de modes de combustion réduisant la consommation du moteur et ses émissions de CO₂.

Enfin, la variante de l'invention prévoyant l'emploi d'un substrat unique pour les fonctions de filtre à particules et de catalyseur SCR permet l'obtention d'un dispositif de post-traitement pour le traitement de l'ensemble des polluants réglementés des gaz d'échappement d'un véhicule automobile.

## Revendications

1. Dispositif de post-traitement des gaz d'échappement d'un moteur à combustion (1) comportant, selon le sens d'écoulement des gaz d'échappement du moteur :
• Un catalyseur d'oxydation (3) ;
• Une embouchure (41) d'un moyen d'introduction (4) de réducteur ou de précurseur d'un réducteur pour la réduction catalytique sélective des oxydes d'azote ;
• Un mélangeur (5) pour le mélange des gaz d'échappement et du réducteur et/ou la conversion du précurseur en réducteur ;
• Un catalyseur de réduction catalytique sélective des oxydes d'azote (6) ;
les éléments précités étant regroupés dans une enveloppe unique (2),
**caractérisé en ce qu'**il comporte en outre un filtre à particules (7) dans l'enveloppe unique, ledit filtre à particules étant soit positionné en aval du catalyseur de réduction catalytique sélective soit constitué par un substrat unique (6') remplissant à la fois le rôle de filtre à particules et celui de catalyseur de réduction catalytique sélective des oxydes d'azote, et **en ce que** le mélangeur (5) est d'un type présentant une longueur de parcours pour des gaz le traversant au moins deux fois supérieure à la longueur qu'il occupe longitudinalement dans l'enveloppe (2).

2. Dispositif selon la revendication 1, **caractérisé en ce qu'**il comporte en outre un pré-catalyseur de réduction catalytique sélective des oxydes d'azote (61) entre le catalyseur d'oxydation (3) et l'embouchure (41).

3. Dispositif selon la revendication 2, **caractérisé en ce que** le pré-catalyseur de réduction catalytique sélective (61) est constitué d'un pain d'une longueur inférieure à 30mm, et de préférence comprise entre 20 mm et 30 mm.

4. Dispositif selon l'une quelconque des revendications précédentes, **caractérisé en ce que** le catalyseur d'oxydation (3) présente une densité de cellule comprise entre 62 et 140 cellules par centimètre carré, et de préférence de l'ordre de 93 cellules par centimètres carré.

5. Dispositif selon l'une quelconque des revendications précédentes, **caractérisé en ce que** le catalyseur d'oxydation (3) présente une épaisseur de paroi de comprise entre 50 µm et 165 µm.

6. Dispositif selon l'une quelconque des revendications précédentes, **caractérisé en ce que** le catalyseur de réduction catalytique sélective des oxydes d'azote (6) présente une densité de cellule comprise entre 62 et 140 cellules par centimètre carré, et de préférence de l'ordre de 93 cellules par centimètres carré.

7. Dispositif selon l'une quelconque des revendications précédentes, **caractérisé en ce que** le catalyseur de réduction catalytique sélective des oxydes d'azote (6) présente une épaisseur de paroi de comprise entre 50 µm et 165 µm.

8. Dispositif selon l'une quelconque des revendications précédentes **caractérisé en ce que** le mélangeur (5) a une longueur inférieure à 100mm et de préférence inférieure à 70mm.

9. Dispositif selon l'une quelconque des revendications précédentes, **caractérisé en ce que** l'enveloppe (2) est munie d'un convergent de sortie (22) doté d'une sortie latérale, sensiblement orthogonale à son entrée.

10. Dispositif selon l'une quelconque des revendications précédentes, **caractérisé en ce que** l'enveloppe unique (2) est sensiblement en forme d'un cylindre muni d'un divergent d'entrée (21) et d'un convergeant de sortie (22), d'une longueur totale inférieure à 700mm.

11. Dispositif selon l'une quelconque des revendications précédentes, **caractérisé en ce que** le moyen d'introduction (4) est un injecteur du type à actionneur par solénoïde ou par piézoélectrique ou mécanique ou hydropneumatique.

12. Dispositif selon l'une quelconque des revendications précédentes, **caractérisé en ce que** le moyen d'introduction (4) est positionné en regard d'une section d'enveloppe identique à la section transversale du catalyseur de réduction catalytique sélective (6).

13. Ensemble comportant un collecteur d'échappement, un dispositif de post-traitement selon l'une quelconque des revendications précédentes, et un conduit reliant le collecteur d'échappement au dispositif de post-traitement, **caractérisé en ce que** le conduit présente une longueur d'au plus 30 cm.

14. Véhicule doté d'un compartiment moteur et d'un ensemble selon la revendication 13, **caractérisé en ce que** l'ensemble est contenu dans le compartiment moteur.

## Patentansprüche

1. Vorrichtung zur Nachbehandlung von Auspuffgasen eines Verbrennungsmotors (1), die je nach Strömungsrichtung der Auspuffgase des Motors folgendes umfasst:
° einen Oxidationskatalysator (3);
° eine Einmündung (41) für ein Einführmittel (4) eines Reduktionsmittels oder Vorläufers eines Reduktionsmittels zur selektiven katalytischen Reduktion der Stickstoffoxide;
° einen Mischer (5) zum Mischen der Auspuffgase und des Reduktionsmittels und/ oder die Umwandlung des Vorläufers in ein Reduktionsmittel;
° einen Katalysator zur selektiven katalytischen Reduktion der Stickstoffoxide (6);
wobei die zuvor genannten Elemente in einer einzigen Hülle (2) zusammengefasst sind,
**dadurch gekennzeichnet, dass** sie darüber hinaus einen Partikelfilter (7) in der einzigen Hülle umfasst, wobei der besagte Partikelfilter entweder stromabwärts vom Katalysator zur selektiven katalytischen Reduktion positioniert ist, oder durch ein einziges Substrat (6') gebildet wird, das sowohl die Aufgabe des Partikelfilters und jene des Katalysators zur selektiven katalytischen Reduktion der Stickstoffoxide erfüllt, und dadurch, dass der Mischer (5) derart ausgeführt ist, dass er eine Strömungslänge für durch ihn hindurchströmende Gase aufweist, die zumindest doppelt so groß ist, wie die Länge, die er in der Hülle (2) in Längsrichtung einnimmt.

2. Vorrichtung nach Anspruch 1, **dadurch gekennzeichnet, dass** sie darüber hinaus einen Vorkatalysator zur selektiven katalytischen Reduktion der Stickstoffoxide (61) zwischen dem Oxidationskatalysator (3) und der Einmündung (41) umfasst.

3. Vorrichtung nach Anspruch 2, **dadurch gekennzeichnet, dass** der Vorkatalysator zur selektiven katalytischen Reduktion der Stickstoffoxide (61) aus einem Block in einer Länge von weniger als 30 mm, und vorzugsweise zwischen 20 und 30 mm gebildet wird.

4. Vorrichtung nach irgendeinem der vorherigen Ansprüche, **dadurch gekennzeichnet, dass** der Oxidationskatalysator (3) eine Zellendichte zwischen 62 und 140 Zellen je Quadratzentimeter, und vorzugsweise in der Größenordnung von 93 Zellen je Quadratzentimeter aufweist.

5. Vorrichtung nach irgendeinem der vorherigen Ansprüche, **dadurch gekennzeichnet, dass** der Oxidationskatalysator (3) eine Wandstärke zwischen 50 µm und 165 µm aufweist.

6. Vorrichtung nach irgendeinem der vorherigen Ansprüche, **dadurch gekennzeichnet, dass** der Katalysator zur selektiven katalytischen Reduktion der Stickstoffoxide (6) eine Zellendichte zwischen 62 und 140 Zellen je Quadratzentimeter, und vorzugsweise in der Größenordnung von 93 Zellen je Quadratzentimeter aufweist.

7. Vorrichtung nach irgendeinem der vorherigen Ansprüche, **dadurch gekennzeichnet, dass** der Katalysator zur selektiven katalytischen Reduktion der Stickstoffoxide (6) eine Wandstärke zwischen 50 µm und 165 µm aufweist.

8. Vorrichtung nach irgendeinem der vorherigen Ansprüche, **dadurch gekennzeichnet, dass** der Mischer (5) eine Länge von unter 100 mm und vorzugsweise von unter 70 mm aufweist.

9. Vorrichtung nach irgendeinem der vorherigen Ansprüche, **dadurch gekennzeichnet, dass** die Hülle (2) mit einem konvergierenden Ausgangsteil (22) ausgestattet ist, das mit einem seitlichen Ausgang versehen ist, der in etwa senkrecht zu seinem Eingang verläuft.

10. Vorrichtung nach irgendeinem der vorherigen Ansprüche, **dadurch gekennzeichnet, dass** die einzige Hülle (2) in etwa die Form eines Zylinders mit einem divergierenden Eingangsteil (21) und einem konvergierenden Ausgangsteil (22) aufweist, der eine Gesamtlänge von weniger als 700 mm aufweist.

11. Vorrichtung nach irgendeinem der vorherigen Ansprüche, **dadurch gekennzeichnet, dass** das Einführmittel (4) ein Injektor in der Art eines Stellglieds ist, das durch ein Magnetventil oder Piezoelektrik oder Mechanik oder Hydropneumatik betätigt wird.

12. Vorrichtung nach irgendeinem der vorherigen Ansprüche, **dadurch gekennzeichnet, dass** das Einführmittel (4) gegenüber einem Hüllenabschnitt positioniert ist, der gleich dem Querschnitt des Katalysators zur selektiven katalytischen Reduktion (6) ist.

13. Baugruppe, einen Auspuffkrümmer, eine Vorrichtung zur Nachbehandlung nach irgendeinem der vorherigen Ansprüche, und eine Leitung umfasst, die den Auspuffkrümmer mit der Vorrichtung zur Nachbehandlung verbindet, **dadurch gekennzeichnet, dass** die Leitung eine Länge von höchstens 30 cm aufweist.

14. Fahrzeug, das mit einem Motorraum und einer Baugruppe nach Anspruch 13 ausgestattet ist, **dadurch gekennzeichnet, dass** die Baugruppe im Motorraum enthalten ist.

## Claims

1. Device for the aftertreatment of the exhaust gases of a combustion engine (1), comprising, in the direction of flow of the exhaust gases from the engine:
° an oxidation catalyst (3);
° an orifice (41) of a means (4) for introducing a reducing agent or a reducing-agent precursor for the selective catalytic reduction of nitrogen oxides;
° a mixer (5) for mixing the exhaust gases and the reducing agent and/or converting the precursor into a reducing agent;
° a catalyst for the selective catalytic reduction of nitrogen oxides (6);
the aforementioned elements being grouped together in a single enclosure (2),
**characterised in that** it further comprises a particle filter (7) in the single enclosure, said particle filter being either positioned downstream of the selective catalytic reduction catalyst or consisting of a single substrate (6') fulfilling the role of both a particle filter and the catalyst for the selective catalytic reduction of nitrogen oxides, and **in that** the mixer (5) is of a type having a travel length for gases passing through it at least twice as great as the length that it occupies longitudinally in the enclosure (2).

2. Device according to claim 1, **characterised in that** it further comprises a pre-catalyst for the selective catalytic reduction of the nitrogen oxides (61) between the oxidation catalyst (3) and the orifice (41).

3. Device according to claim 2, **characterised in that** the selective catalytic reduction pre-catalyst (61) consists of a cake with a length of 30 mm and preferably between 20 mm and 30 mm.

4. Device according to any one of the preceding claims, **characterised in that** the oxidation catalyst (3) has a cell density of between 62 and 140 cells per square centimetre, and preferably around 93 cells per square centimetre.

5. Device according to any one of the preceding claims, **characterised in that** the oxidation catalyst (3) has a wall thickness of between 50 µm and 165 µm.

6. Device according to any one of the preceding claims, **characterised in that** the catalyst for the selective catalytic reduction of nitrogen oxides (6) has a cell density of between 62 and 140 cells per square centimetre, preferably around 93 cells per square centimetre.

7. Device according to any one of the preceding claims, **characterised in that** the catalyst for the selective catalytic reduction of nitrogen oxides (6) has a wall thickness of between 50 µm and 165 µm.

8. Device according to any one of the preceding claims, **characterised in that** the mixer (5) has a length of less than 100 mm and preferably less than 70 mm.

9. Device according to any one of the preceding claims, **characterised in that** the enclosure (2) is provided with a converging discharge (22) provided with a lateral outlet, substantially orthogonal to its inlet.

10. Device according to any one of the preceding claims, **characterised in that** the single enclosure (2) is substantially in the form of a cylinder provided with a diverging inlet (21) and a converging outlet (22), with a total length of less than 700 mm.

11. Device according to any one of the preceding claims, **characterised in that** the introduction means (4) is an injector of the type with a solenoid or piezoelectric or mechanical or hydropneumatic actuator.

12. Device according to any one of the preceding claims, **characterised in that** the introduction means (4) is positioned opposite an enclosure section identical to the cross section of the selective catalytic reduction catalyst (6).

13. Assembly comprising an exhaust manifold, an aftertreatment device according to any one of the preceding claims, and a pipe connecting the exhaust manifold to the aftertreatment device, **characterised in that** the pipe has a length of no more than 30 cm.

14. Vehicle provided with an engine compartment and an assembly according to claim 13, **characterised in that** the assembly is contained in the engine compartment.
